# EUROPEAN PATENT APPLICATION

(11) **EP 3 964 077 A1**
(43) Date of publication of application: **09.03.2022**
(21) Application number: 20194756.1
(22) Date of filing: 07.09.2020
(51) Int. Cl.: A23L 5/10, A47J 27/04, A47J 37/04

(54) **KITCHEN APPLIANCE AND METHOD FOR ROASTING MEAT**

(71) Applicant: Koninklijke Philips N.V., 5656 AG Eindhoven (NL)
(72) Inventor: SUN, Peichun, 5656 AE Eindhoven (NL); XIAO, Weimin, 5656 AE Eindhoven (NL); JIN, Yafang, 5656 AE Eindhoven (NL); LI, Ming, 5656 AE Eindhoven (NL); LUO, Zhongchi, 5656 AE Eindhoven (NL)
(74) Representative: Kapoor, Pavan Puneet

(57) **Abstract**

A kitchen appliance (10) is disclosed comprising a food preparation chamber (20) including a fan (32), a heating element (34) and a humidifier (40); and a controller (50) arranged to control the fan, the heating element and the humidifier, the controller being configured to implement a program for roasting meat (1). The program comprises a steaming stage to steam the meat in the food preparation chamber during which the controller controls the humidifier for a first period of time and controls the fan and the heating element during said first period of time to generate a first wind speed within the food preparation chamber and keep the temperature within the food preparation chamber in a range of 60-70°C during said steaming stage; a drying stage to dry the steamed meat after said steaming stage during which the controller controls the fan and the heating element for a second period of time to increase the wind speed within the food preparation chamber to a second wind speed and reduce the humidity in the food preparation chamber; and a roasting stage to roast the dried meat after said drying stage during which the controller controls the heating element for a third period of time to keep the temperature within the food preparation chamber in a range of 140-160°C during said roasting stage. Also disclosed is a corresponding method for roasting meat.

## Description

### FIELD OF THE INVENTION

The present invention relates to a kitchen appliance comprising a food preparation chamber including a fan, a heating element and a humidifier; and a controller arranged to control the fan, the heating element and the humidifier, the controller being configured to implement a program for roasting meat.

The present invention further relates to a method for roasting meat.

### BACKGROUND OF THE INVENTION

In modern cuisine, meat preparation takes in a prominent place. Meats, and in particular red meats such as beef can be prepared in a manner of ways, e.g. in accordance to personal taste, in order to achieve the desired cooking result of the meat. For example, in the case of beef, the meat may be prepared, e.g. roasted or fried, in a number of different ways, e.g. for different durations, to render the meat blue, rare, medium rare, medium, medium-well or well-done, which corresponds to the core of the meat being cooked to different degrees as reflected by the internal or core temperature of the meat after cooking. For example, a blue steak may have an core temperature in a range of 46-49°C, a rare steak may have a core temperature in a range of 52-55°C, a medium-rare steak may have a core temperature in a range of 55-60°C, a medium steak may have a core temperature in a range of 60-65°C, a medium-well steak may have a core temperature in a range of 65-69°C and a well-done steak may have a core temperature of about 71°C.

The degree of cooking of the meat typically comprises a trade-off between the moisture retention in the meat and its flavour. When cooked for longer at high temperatures, the meat will dry out more but the Maillard reaction occurring at the meat surface at such elevated temperatures adds flavour to the meat. Moisture retention may be improved by steaming the meat until it reaches a given core temperature before roasting it, but this is rather time-consuming and the high-temperature roasting step can cause the formation of harmful compounds in the meat such as polycyclic aromatic hydrocarbons (PAHs) and heterocyclic amine compounds (HACs), which compounds in some studies have been identified as being potentially carcinogenic. Hence, there exists a need for the preparation of such meats in which the preparation time and the formation of potentially harmful compounds in the meat during its preparation can be reduced.

### SUMMARY OF THE INVENTION

The present invention seeks to provide a kitchen appliance capable of roasting meat in a relatively short period of time including a roasting step at a low enough temperature to prevent significant formation of potentially harmful compounds in the meat.

The present invention further seeks to provide a method of roasting meat in a relatively short period of time including a roasting step at a low enough temperature to prevent significant formation of potentially harmful compounds in the meat.

According to an aspect, there is provided a kitchen appliance comprising a food preparation chamber including a fan, a heating element and a humidifier; and a controller arranged to control the fan, the heating element and the humidifier, the controller being configured to implement a program for roasting meat, said program comprising a steaming stage to steam the meat in the food preparation chamber during which the controller controls the humidifier for a first period of time and controls the fan and the heating element during said first period of time to generate a first wind speed within the food preparation chamber and keep the temperature within the food preparation chamber in a range of 60-70°C during said steaming stage; a drying stage to dry the steamed meat after said steaming stage during which the controller controls the fan and the heating element for a second period of time to increase the wind speed within the food preparation chamber to a second wind speed and reduce the humidity in the food preparation chamber; and a roasting stage to roast the dried meat after said drying stage during which the controller controls the heating element for a third period of time to keep the temperature within the food preparation chamber in a range of 140-160°C during said roasting stage.

The present invention is based on the insight that the combination of a relatively short steaming stage and a roasting stage at a temperature not exceeding 160°C can produce cooked meats such as beef in which the formation of harmful side products in the Maillard reaction is suppressed whilst yielding a relatively short duration of the entire meat preparation program. Moreover, compared to traditional cooking methods in which the meat is roasting at higher temperatures, the meat maintains a higher moisture content, thereby yielding a prepared piece of meat that is experienced by its consumer as being particularly succulent and tender.

The controller may be arranged to control the humidifier during said steaming stage such that the relative humidity in the food preparation chamber is at least 50% during said steaming stage. Preferably, the controller may be arranged to control the humidifier during said steaming stage such that the relative humidity in the food preparation chamber is at least 70% during said steaming stage. More preferably, the controller may be arranged to control the humidifier during said steaming stage such that the relative humidity in the food preparation chamber is about 100% during said steaming stage to ensure particularly effective steaming of the meat during this stage.
The controller may be arranged to control the fan and the heating element during the drying stage such that the relative humidity in the food preparation chamber is at most 30% during said drying stage to ensure particularly effective drying of the meat during this stage.

In an embodiment, the kitchen appliance further comprises a humidity sensor in the food preparation chamber communicatively coupled to the controller, wherein the controller is arranged to control the humidifier during said steaming stage in response to said humidity sensor. In this manner, the humidity in the food preparation chamber can be accurately controlled during the steaming stage, thereby improving the effectiveness of the steaming process of the meat.

In another embodiment, the kitchen appliance further comprises a meat temperature sensor communicatively coupled to the controller, wherein the controller is arranged to terminate said roasting stage in response to said meat temperature sensor in order to accurately control the degree of cooking of the meat. For example, the controller may be arranged to terminate said roasting stage in response to said meat temperature sensor indicating a core temperature of the meat in a range of 60-72°C to ensure that the meat is sufficiently cooked or the controller may be arranged to terminate said roasting stage in response to said meat temperature sensor indicating a core temperature of the meat corresponding to a user-specified meat cooking preference such that the meat is cooked in accordance with the personal preference of the user.

The meat temperature sensor may be an infrared sensor for measuring the core temperature of the meat in a contactless fashion or instead may be a probe sensor for insertion into the meat to achieve a particularly accurate reading of the meat's core temperature.

In an embodiment, the food preparation chamber is a sealed chamber further comprising a valve under control of the controller, and wherein the controller is arranged to open said valve during the drying stage. This has the advantage that the meat may be prepared at higher than ambient pressures, thereby further reducing the preparation time of the meat.

The first wind speed may be in a range of 5-7 m/s and the second wind speed may be in a range of 7-9 m/s to achieve the desired steaming and drying results in a relatively short period of time.

The program may further comprise a first preheating stage preceding the steaming stage in which the controller is arranged to control the humidifier, the fan and the heating element to generate the desired humidity and temperature for the steaming stage within the food preparation chamber. By allowing the meat to be placed within the food preparation chamber in which the air within the food preparation chamber has the desired temperature and relative humidity, the preparation of the meat can be even more accurately controlled.

Similarly, the program further may comprise a second preheating stage preceding the roasting stage in which the controller is arranged to control the heating element to generate the desired temperature for the roasting stage within the food preparation chamber to improve control over the meat preparation.

The controller further may be arranged to control the heating element to maintain the temperature within the food preparation chamber from the steaming stage during said drying stage such that the drying of the meat is performed at the same temperature as the steaming of the meat, as this yields a particularly straightforward and effective meat preparation process.

The kitchen appliance may take any suitable shape or form. In example embodiments, the kitchen appliance is an oven or an air fryer.

According to another aspect, there is provided a method of roasting meat, the method comprising steaming the meat in an airflow having a first airflow speed, a relative humidity of at least 50% and a temperature in a range of 60-70°C for a first period of time; drying the steamed meat in a further airflow having a second airflow speed higher than the first airflow speed and a relative humidity not exceeding 30% for a second period of time; and roasting the dried meat for a third period of time at a temperature in a range of 140-160°C. With such a method, the combination of a relatively short steaming stage and a roasting stage at a temperature not exceeding 160°C can produce cooked meats such as beef in which the formation of harmful side products in the Maillard reaction is suppressed whilst yielding a relatively short duration of the entire meat preparation program. Moreover, compared to traditional cooking methods in which the meat is roasting at higher temperatures, the meat maintains a higher moisture content, thereby yielding a prepared piece of meat that is experienced by its consumer as being particularly succulent and tender.

Preferably, the method further comprises terminating the roasting of said dried meat upon the core temperature of the dried meat reaching a set temperature such that the preparation of the meat can be controlled in a particularly accurate manner.

### BRIEF DESCRIPTION OF THE DRAWINGS

Embodiments of the invention are described in more detail and by way of non-limiting examples with reference to the accompanying drawings, wherein:
FIG. 1 schematically depicts a cross-sectional view of a kitchen appliance according to an embodiment;
FIG. 2 is a flowchart of a method of roasting meat according to an embodiment;
FIG. 3 schematically depicts a cross-sectional view of a kitchen appliance according to another embodiment;
FIG. 4 schematically depicts a cross-sectional view of a kitchen appliance according to yet another embodiment;
FIG. 5 schematically depicts a cross-sectional view of a kitchen appliance according to yet another embodiment; and
FIG. 6 schematically depicts a cross-sectional view of a kitchen appliance according to yet another embodiment.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

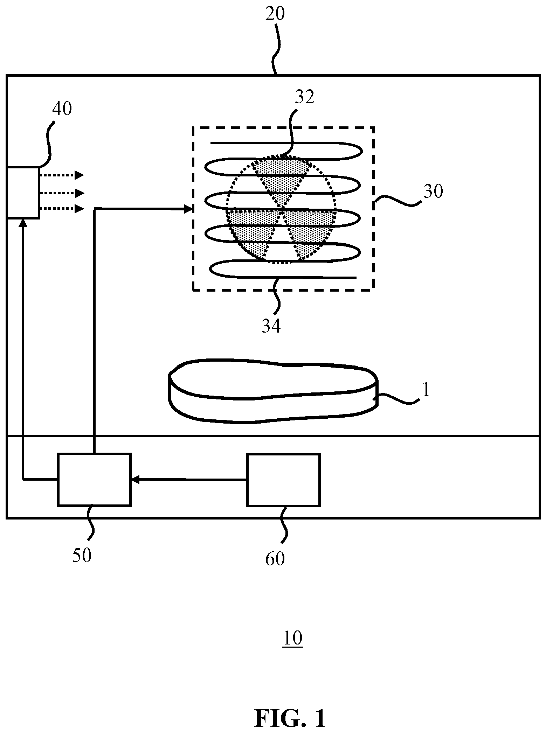

FIG. 1 schematically depicts a kitchen appliance 10 according to an example embodiment of the present invention. The kitchen appliance 10 comprises a food preparation chamber 20 in which foods such as a piece of meat 1 may be prepared. A fan 32 and a heating element 34 are mounted within the food preparation chamber 20. The fan 32 and the heating element 34 may be discrete elements or may form part of a unit 30, e.g. a fan-assisted heating element or the like. The fan 32 and the heating element 34 are controlled by a controller within the kitchen appliance 10, which controller may take any suitable shape or form, e.g. a microcontroller, processor or the like. The food preparation chamber 20 further comprises a humidifier 40 under control of the controller 50 to control the relative humidity within the food preparation chamber 20. For example, the humidifier 40 may be a steam generator for generating steam, and to this end the humidifier 40 may comprise a water reservoir and a separate heating element (not shown) under control of the controller 50 to evaporate the water from the water reservoir and expel the water vapour into the food preparation chamber 20 as indicated by the dashed arrows.

The kitchen appliance 10 may further comprise a user interface 60 for selecting a mode of operation of the kitchen appliance 10. In the context of the present application, such a user interface 60 may take any physical shape, such as one or more buttons, dials, touch screens and so on, or any combination thereof. Alternatively or additionally, the user interface 60 may include a communication module such an Ethernet interface, wireless radio or the like, through which a user can provide the controller 50 with a mode of operation for the kitchen appliance 10 selected on a remote device such as through a dedicated remote controller, through an app for controlling the kitchen appliance 10 installed on a remote electronic device communicatively coupled to the user interface 60, such as a smart phone, tablet computer, laptop computer or the like, and so on. The user interface 60 may further comprise one or more output devices, e.g. a loudspeaker, LED, display screen or the like through which the user can be informed about a particular status of the kitchen appliance 10, as will be explained in further detail below.

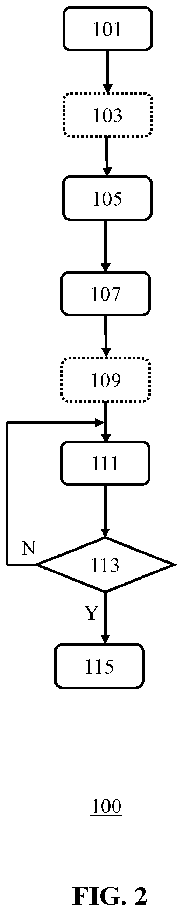

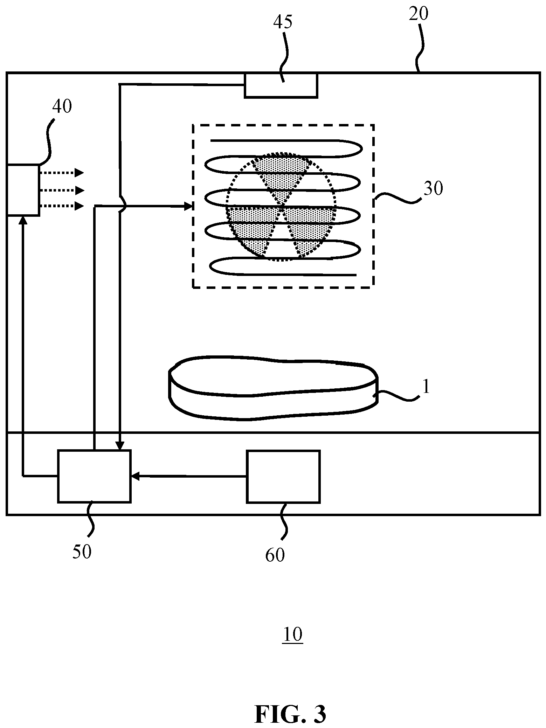

The controller 50 is arranged to implement a program for roasting the meat 1, e.g. a portion of red meat such as beef, in accordance with the flowchart of the method 100 as schematically depicted in FIG. 2. The method 100 starts in operation 101, e.g. by a user selecting the meat preparation program through user interface 60, after which the method 100 proceeds to optional pre-heating operation 103 in which the controller 50 controls the heating element 34 and the humidifier 40 to heat the air within the food preparation chamber 20 to a temperature within a range of 60-70°C and a relative humidity of at least 50% prior to placing the meat 1 in the food preparation chamber 20. This has the advantage that the meat 1 is not partially cooked during the preparation of the food processing chamber 20, which could prevent the cooking of the meat 1 to the desired texture. The temperature and relative humidity values may be controlled by operating the heating element 34 and the humidifier 40 for a set period of time, e.g. dependent on the volume of the food preparation chamber 20, or may be sensor-controlled, e.g. using a temperature sensor and/or a humidity sensor within the food preparation chamber 20, with the controller 50 being responsive to such sensors. An example embodiment of such a kitchen appliance 10 is shown in FIG. 3, in which the controller 50 is responsive to a humidity sensor 45 within the food preparation chamber 20 such that the controller 50 can operate the humidifier 40 in response to the relative humidity within the food preparation chamber 20 as sensed by the humidity sensor 45 to ensure that the relative humidity of the air within the food preparation chamber 20 reaches and is maintained at the desired value.

During the pre-heating operation 103, the controller 50 may further operate the fan 32 in order to force heated air through the food preparation chamber 20 in order to ensure homogeneous heat distribution throughout the food preparation chamber 20. For example, the fan 32 may be operated to generate wind speeds in a range of 5-7 m/s, e.g. 6.5 m/s, though the food preparation chamber 20 to achieve such a homogeneous heat and humidity distribution therein but other wind speeds may be equally suitable, e.g. depending on the size and dimensions of the kitchen appliance 10. Upon the air in the food preparation chamber 20 having reached the desired temperature and relative humidity, the controller 50 may control the output device of the user interface 60 to indicate to the user of the kitchen appliance 10 that the meat 1 may be placed in the food preparation chamber 20. As previously mentioned, the pre-heating operation 103 may be omitted, such that the meat 1 is placed in the food preparation chamber 20 at the beginning of the method 100.

Next, the method 100 proceeds to steaming operation 105 in which the controller 50 controls the heating element 34 and the humidifier 40 to keep the air within the food preparation chamber 20 to a temperature within a range of 60-70°C and a relative humidity of at least 50% in order to steam the meat 1 for a defined period of time. Preferably, the relative humidity is at least 70% and more preferably is as close to 100% as possible. For instance, the period of time may be in a range of 5-10 minutes, e.g. 6 minutes. During the steaming operation, the controller 50 further operates the fan 32 in order to force the heated moist air over the meat 1. The fan 32 may be operated to generate a first wind speed, e.g. a wind speed in a range of 5-7 m/s, e.g. 6.5 m/s, in order to ensure effective steaming of the meat. If the wind speed is too low, such effective steaming may not be achieved, whereas if the wind speed is too high, the meat 1 may dry out.

Upon completion of the steaming operation 105, the method 100 proceeds to drying operation 107 in which the controller 50 disables the humidifier 40 and operates the fan 32 and heating element 34 to reduce the relative humidity of the air in the food preparation chamber 20 to below 30% and preferably to as close to 0% as possible in order to dry off the meat 1 by removal of the steam condensed on the surface of the meat 1. During the drying operation 107, the wind speed generated with the fan 32 is increased relative to its wind speed during the steaming operation 105 to achieve effective drying of the surface of the meat 1 in a relatively short period of time. In an example embodiment, the controller 50 controls than fan 32 such that the wind speed generated with the fan 32 is in a range of 7-9 m/s. If the wind speed is too low, such effective drying of the meat 1 may not be achieved, whereas if the wind speed is too high, the meat 1 may dry out too much. The drying operation 107 may take 7-11 minutes, e.g. 9 minutes. During the drying operation 107, the air temperature within the food preparation chamber 20 preferably is kept the same as during the steaming operation 105, although the air temperature may be increased as long as the air temperature remains below 100°C.

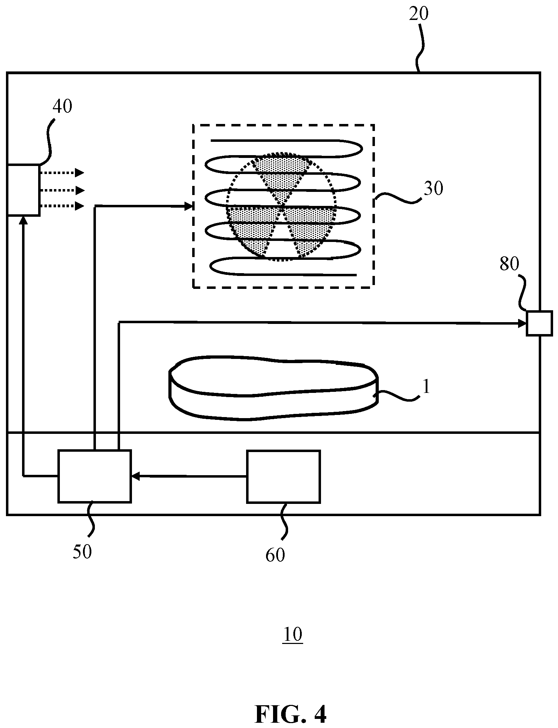

In an example embodiment, the kitchen appliance 10 may be a closed system in which the food preparation chamber 20 is sealed. In such a case, the food preparation chamber 20 may further comprise a valve 80 under control of the controller 50 as schematically depicted in FIG. 4, which valve 80 may be opened by the controller 50 during the drying operation 107 such as to replace the humid air in the food preparation chamber 20 with dry air, e.g. ambient air in order to reduce the relative humidity of the air within the food preparation chamber 20 to below 30%.

Upon completion of the drying operation 107, the controller 50 may operate the output device of the user interface 60 to signal to the user that the meat 1 is to be temporarily removed from the food preparation chamber 20 if optional pre-heating operation 111 is to be engaged. During pre-heating operation 111, the controller 50 operates the heating element 34 such as to increase the air temperature within the food preparation chamber 20 to an air temperature not exceeding 160°C, preferably an air temperature in a range of 140-160°C. Upon reaching this air temperature, the controller 50 may again operate the output device of the user interface 60 to signal to the user that the meat 1 is to be returned to the food preparation chamber 20 for roasting operation 113. Such a pre-heating operation 111 alternatively may be omitted from the method 100 in which case the meat 1 remains in the food preparation chamber 20 whilst the controller 50 controls the heating element 34 such as to increase the air temperature in the food preparation chamber 20 to an air temperature not exceeding 160°C, preferably an air temperature in a range of 140-160°C, although the presence of the meat 1 during this ramping up of the air temperature may cause some additional cooking of the meat 1, which may make control over the final cooked condition of the meat 1 somewhat more difficult.

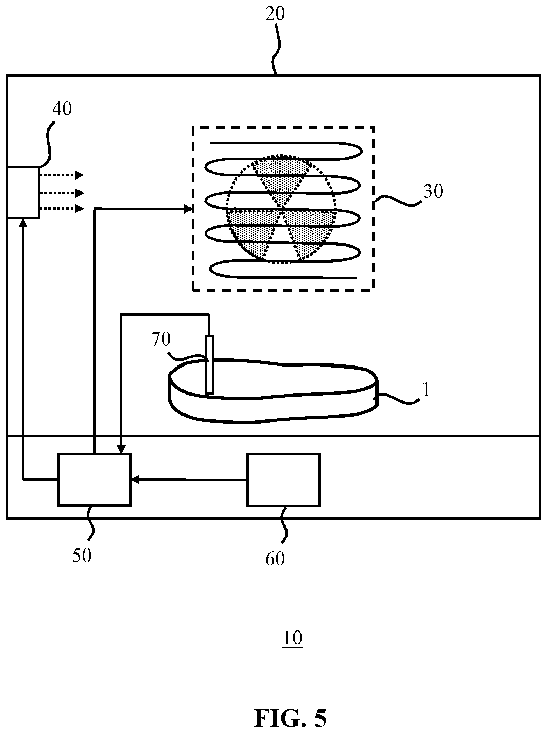

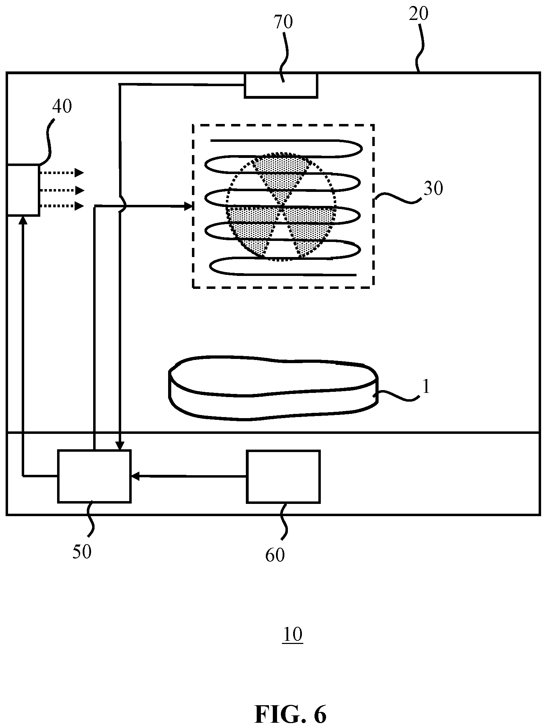

In roasting operation 113, the meat 1 is roasted or grilled at the aforementioned temperature not exceeding 160°C for a further period of time. The fan 32 may be engaged during the roasting operation to generate a hot air flow over the meat 1 to improve evenness of cooking. Alternatively, the fan 32 may remain disengaged during the roasting operation 113. The further period of time may be a set period of time, e.g. based on empirical cooking data of the meat 1, or may be based on an actual core temperature of the meat 1. To this end, the kitchen appliance may further comprise a meat thermometer 70 within the food preparation chamber 20 such as the infrared thermometer 70 schematically depicted in FIG. 5, which detects the infrared radiation emitted by the meat 1 during the roasting operation to determine its core temperature or the probe thermometer 70 schematically depicted in FIG.6, in which the temperature sensitive tip of the probe thermometer 70 is inserted into the core of the meat 1 in order to accurately determine its core temperature. Where such a meat thermometer 70 is present, the controller 50 is responsive to the meat temperature and terminates the roasting operation 113 in response to the actual core temperature of the meat 1 as measured with the meat thermometer 70 reaching a target value. The target value of the core temperature of the meat 1 may be fixed, e.g. may be set in a range of 60-72°C and preferably in a range of 62.8 - 71°C as 62.8°C is the safe minimum internal (core) temperature for meats such as beef, pork, veal and lamb as recommended by the U.S. department of Agriculture (USDA) and an internal (core) temperature of 71°C is recommended by the American Meat Science Association (AMSA) as the temperature at which meat is considered sufficiently cooked. Alternatively, the target value of the core temperature of the meat 1 may be user-defined, e.g. through the user interface 60, to define a user-preferred doneness level of the meat 1. In an example embodiment, the user may specify the following doneness levels and associated target values of the core temperature of the meat as summarized in Table 1:

**Table 1**

| Doneness Level | Target core temperature (°C) |
|---|---|
| Blue | 46-49 |
| Rare | 52-55 |
| Medium rare | 55-60 |
| Medium | 60-65 |
| Medium well | 65-69 |
| Well done | 71+ |

During the roasting operation 113, the controller 50 may check in operation 115 whether the set duration of the roasting operation 113 has elapsed or whether the actual core temperature of the meat 1 has reached its target value. If this is not yet the case, the method 100 continues with the roasting operation 113, otherwise, the method 100 terminates in operation 117 in which the controller 50 may operate the output device of the user interface 60 to signal to the user that the meat 1 has been cooked in accordance with the method 100 and can be removed from the kitchen appliance 10 for consumption.

At this point it is noted that the kitchen appliance 10 may include any combination of the aforementioned embodiments. For instance, in addition to the fan 32, the heating element 34 and the humidifier 40, the food preparation chamber 20 may further house any combination of the humidity sensor 45, the meat thermometer 70 and the valve 80. It is furthermore noted that although the method 100 has been described in the context of the operation of the kitchen appliance 10, it should be understood that the method 100, i.e. the steaming 105 of the meat in an airflow having a first airflow speed, a relative humidity of at least 50%, preferably at least 70% and more preferably about 100% and a temperature in a range of 60-70°C for a first period of time, the drying 107 of the steamed meat in a further airflow having a second airflow speed higher than the first airflow speed and a relative humidity not exceeding 30% for a second period of time; and the roasting 111 of the dried meat for a third period of time at a temperature in a range of 140-160°C, may be achieved in any suitable manner and is no limited to implementation through the operation of the kitchen appliance 10. The kitchen appliance 10 may take any suitable shape or form. For example, the kitchen appliance 10 may be an oven, steam oven, a microwave or an air fryer but it should be understood that the embodiments of the kitchen appliance 10 are not limited to these examples.

Next, proof of concept is provided for the kitchen appliance 10 and the method 100 of the present invention using the following examples. It should be understood that these examples are entirely non-limiting and are not intended to restrict the scope of the present invention in any way.

In the following examples, a portion of beef was portioned in 3 portions of equal weight (66.45g) having an initial temperature of 12.5°C, which were prepared in the following ways using the kitchen appliance 10:
Portion 1: The portion of beef was placed in the food preparation chamber 20 pre-heated to an air temperature of 160°C having a relative humidity of 0% and grilled (roasted) under a wind speed of 6.47 m/s generated with the fan 32 until its core reached a temperature of 65°C.
Portion 2: The portion of beef was cooked in accordance with the cooking instructions provided on the beef packaging. To this end, the portion was placed in the food preparation chamber 20 pre-heated to an air temperature of 55°C having a relative humidity of 86% and steamed for 1 hour under a wind speed of 6.47 m/s generated with the fan 32 until its core temperature reached 54°C. Next, the portion of beef was dried at an air temperature of 58°C and a relative humidity of 51% for 5 minutes and at an air temperature of 61°C and a relative humidity for another 15 minutes at the same wind speed as during the steaming of the beef portion. The beef portion was temporarily removed from the kitchen appliance 10 during which the air in the food preparation chamber was pre-heated to 300°C with a relative humidity of 0%, after which the beef portion was reintroduced into the food preparation chamber and roasted at 300°C under a wind speed of 6.47 m/s until its core temperature reached 65°C.
Portion 3: The portion of beef was cooked in accordance with an example embodiment of method 100. To this end, the portion was placed in the food preparation chamber 20 pre-heated to an air temperature of 70°C having a relative humidity of 54.3% and steamed for 6 minutes under a wind speed of 6.47 m/s generated with the fan 32. Next, the portion of beef was dried at an air temperature of 70°C and a relative humidity of 26.3% for 9 minutes with an increased wind speed of 7.77 m/s. The beef portion was temporarily removed from the kitchen appliance 10 during which the air in the food preparation chamber was pre-heated to 160°C with a relative humidity of 0%, after which the beef portion was reintroduced into the food preparation chamber and roasted at 160°C under a wind speed of 7.77 m/s to ensure homogeneous heat distribution throughout the food preparation chamber 20 until its core temperature reached 65°C.

The results of the three cooking methods are summarized in Table 2.

**Table 2**

| | Portion 1 | Portion 2 | Portion 3 |
|---|---|---|---|
| Weight loss (%) | 20.06 | 24.29 | 19.48 |
| Hardness (a.u.) | 1583 | 1148 | 1132 |
| Juiciness (%.) | 19.13 | 20.12 | 28.21 |
| Total cooking time (min) | 11.01 | 87.28 | 21.54 |
| Appearance | Well-done, dry | Medium well | Medium well |

The hardness (tenderness) and juiciness of the beef portions were determined using a texture analyser (Stable Micro Systems, TA-XT PLUS) whereas the appearance of the cooked beef portion were evaluated from digital images captured with a Nikon digital camera using the same camera settings for all three digital images. It can be directly observed from Table 2 that the cooking method 100 of portion 3 led to a portion of beef having a higher tenderness and a significantly higher juiciness than the other two cooking methods, whilst the cooking time was significantly shorter than the recommended cooking method as per the packaging instructions. Moreover, the portion of beef cooking in accordance with the method had noticeably less surface scorching compared to the other two portions, which can be directly linked to less pronounced Maillard reactions taking place at the surface of the meat cooked in accordance with the method 100 compared to the other two cooking methods. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A kitchen appliance (10) comprising:
a food preparation chamber (20) including a fan (32), a heating element (34) and a humidifier (40); and
a controller (50) arranged to control the fan, the heating element and the humidifier, the controller being configured to implement a program for roasting meat (1), said program comprising:
a steaming stage to steam the meat in the food preparation chamber during which the controller controls the humidifier for a first period of time and controls the fan and the heating element during said first period of time to generate a first wind speed within the food preparation chamber and keep the temperature within the food preparation chamber in a range of 60-70°C during said steaming stage;
a drying stage to dry the steamed meat after said steaming stage during which the controller controls the fan and the heating element for a second period of time to increase the wind speed within the food preparation chamber to a second wind speed and reduce the humidity in the food preparation chamber; and
a roasting stage to roast the dried meat after said drying stage during which the controller controls the heating element for a third period of time to keep the temperature within the food preparation chamber in a range of 140-160°C during said roasting stage.

2. The kitchen appliance (10) of claim 1, wherein the controller (50) is arranged to control the humidifier (40) during said steaming stage such that the relative humidity in the food preparation chamber (20) is at least 50%, preferably at least 70% and more preferably 100% during said steaming stage.

3. The kitchen appliance of claim 1 or 2, wherein the controller (50) is arranged to control the fan and the heating element (30) during the drying stage such that the relative humidity in the food preparation chamber is at most 30% during said drying stage.

4. The kitchen appliance (10) of any of claims 1-3, further comprising a humidity sensor (45) in the food preparation chamber (20) communicatively coupled to the controller (50), wherein the controller is arranged to control the humidifier (40) during said steaming stage in response to said humidity sensor.

5. The kitchen appliance (10) of any of claims 1-4, further comprising a meat temperature sensor (70) communicatively coupled to the controller (50), wherein the controller is arranged to terminate said roasting stage in response to said meat temperature sensor.

6. The kitchen appliance (10) of claim 5, wherein the controller (50) is arranged to terminate said roasting stage in response to said meat temperature sensor (70) indicating a core temperature of the meat in a range of 60-72°C.

7. The kitchen appliance of claim 5, wherein the controller (50) is arranged to terminate said roasting stage in response to said meat temperature sensor (70) indicating a core temperature of the meat corresponding to a user-specified meat cooking preference.

8. The kitchen appliance (10) of any of claims 5-7, wherein the meat temperature sensor (70) is an infrared sensor or a probe sensor.

9. The kitchen appliance (10) of any of claims 1-8, wherein the food preparation chamber (20) is a sealed chamber further comprising a valve (80) under control of the controller (50), and wherein the controller is arranged to open said valve during the drying stage.

10. The kitchen appliance (10) of any of claims 1-9, wherein the first wind speed is in a range of 5-7 m/s and the second wind speed is in a range of 7-9 m/s.

11. The kitchen appliance (10) of any of claims 1-10, wherein the program further comprises a first preheating stage preceding the steaming stage in which the controller (50) is arranged to control the humidifier (40),the fan (32) and the heating element (34) to generate the desired humidity and temperature for the steaming stage within the food preparation chamber (20).

12. The kitchen appliance (10) of any of claims 1-11, wherein the program further comprises a second preheating stage preceding the roasting stage in which the controller (50) is arranged to control the heating element (34) to generate the desired temperature for the roasting stage within the food preparation chamber (20).

13. The kitchen appliance (10) of any of claims 1-12, wherein the controller (50) is arranged to control the heating element (34) to maintain the temperature within the food preparation chamber (20) from the steaming stage during said drying stage.

14. A method (100) of roasting meat (1), the method comprising:
steaming (105) the meat in an airflow having a first airflow speed, a relative humidity of at least 50% and a temperature in a range of 60-70°C for a first period of time;
drying (107) the steamed meat in a further airflow having a second airflow speed higher than the first airflow speed and a relative humidity not exceeding 30% for a second period of time; and
roasting (111) the dried meat for a third period of time at a temperature in a range of 140-160°C.

15. The method (100) of claim 14, further comprising terminating the roasting (111) of said dried meat upon the core temperature of the dried meat reaching a set temperature.
